# EUROPEAN PATENT SPECIFICATION

(11) **EP 0 545 822 B1**
(45) Date of publication and mention of the grant of the patent: **07.06.2000**
(21) Application number: 92403269.1
(22) Date of filing: 03.12.1992
(51) Int. Cl.: G06F 17/30

(54) **A common file access system and a common file access method in a distributed memory type computer system**
Gemeinsames Dateizugriffssystem und gemeinsames Dateizugriffsverfahren in einem Computersystem mit verteiltem Speicher
Système commun d'accès de fichier et procédé commun d'accès de fichier dans un système informatique avec une mémoire distribuée

(30) Priority: 03.12.1991 JP 31908691
(43) Date of publication of application: 09.06.1993
(73) Proprietor: FUJITSU LIMITED, Kawasaki-shi, Kanagawa 211 (JP)
(72) Inventor: Kaku, Masaaki, c/o Fujitsu Limited, Kawasaki-shi, Kanagawa 211 (JP); Sakamoto, Yoshinori, c/o Fujitsu Limited, Kawasaki-shi, Kanagawa 211 (JP); Yoshimura, Kenji, c/o Fujitsu Limited, Kawasaki-shi, Kanagawa 211 (JP)
(74) Representative: Joly, Jean-Jacques

(56) References cited:
- EP-A- 0 312 865
- EP-A- 0 417 396
- USENIX ASSOCIATION, PROCEEDINGS OF THE WINTER 1990 USENIX CONFERENCE, 26 January 1990, WASHINGTON D.C., USA pages 1 - 9 BARKLEY R.E., LEE T.P. 'A Dynamic File System Inode Allocation and Reclaim Policy'
- RESEARCH DISCLOSURE, RD32627, 10 June 1991, NEW YORK, USA page 399 ANONYMOUS '"Distributed Image Storage and Retrieval System for a Local Area Network'

## Description

### BACKGROUND OF THE INVENTION

### 1. Field of the Invention

The present invention relates to a file access system in a distributed memory type computer system, and more particularly to a common file access system wherein the distributed memory type computer system has a common file system used by each computer in the distributed memory type computer system.

### 2. Description of the Related Art

In a conventional distributed memory type computer system that is formed by a LCMP (loosely coupled multiprocessor), each computer in the system must have a respective file system so as to guarantee the uniqueness of file data. This is because if the system has a common file system accessed by a plurality of computers in the system, in accordance with a write order produced by an application program in the user space set up in each computer, the operating system in a kernel space set up in each computer individually re-writes data in the user space even if this user space is commonly used by the other computers so that the user space is updated without an exclusion control between the computers, e.g., an exclusion control using a file control table set up in the kernel space of each computer, etc.

As described above, each computer of the distributed memory type computer system has a respective file system in a conventional art. Therefore, in the conventional art there are some problems that some processing, e.g., a file data search process or an access priority check process, etc., become more complicated, and this in particular applies to the case when a file set up by another computer is accessed, and thus the performance of the total system remarkably deteriorates thereby. Further, when maintaining work of the computer system, the work of updating the version of an operating system or the work of debugging a program needs to implement every file system so that there is another problem that the quantity of the maintenance work is increased.

EP-A-0 417 396 discloses a data retrieval system for distributed terminals that need to access data from various geographically diverse storage locations. A central index contains prestored information about image objects which are stored at the geographically diverse storage locations. The central index is not able to manage file location information, such as for instance automatically updating such information. Therefore, writing data into a common file system from a distributed terminal is not possible in the system of EP-A-0 417 396.

Document Research Disclosure, RD32627, June 10, 1991, New York, USA, page 399, Anonymous "Distributed Image Storage and Retrieval System for a Local Area Network" discloses another data retrieval system in which an index contains prestored information relating to the location of image files stored at various storages. The index does not manage file location information. Also, the problem of writing data into a common file system from a distributed terminal is not addressed.

### SUMMARY OF THE INVENTION

The purpose of the present invention is to solve the problems described above, and to provide a new file access system and a new file access method that enables realization of a distributed memory type computer system having a common file system, while maintaining the uniqueness of a file data used commonly by each computer in the distributed memory type computer system.

Further, the purpose of the present invention is to provide a distributed memory type computer system having a common file system the performance of which as a total computer system experiences little deterioration even if formed by a great number of computers.

Furthermore, the purpose of the present invention is to provide a distributed memory type computer system having a common file system for which maintenance work, e.g., updating the version of the operating system, debugging a program in common with every computer in the distributed memory type computer system, etc., is simplified.

According to the present invention, there is provided a distributed memory type computer system comprising plural distributed processing computers and a common file system for storing file data being accessed by said plural distributed processing computers, characterized in that it comprises: at least one sub-master computer having a sub-master control table for managing file locations in said common file system thereby providing each of said distributed processing computers with information on a file location of a file in said common file system in response to an inquiry from said each distributed processing computer about said file location, and a master computer for accessing said common file system and managing file data in said common file system in accordance with a file access request and said information on a file location, received from said each distributed processing computer.

A corresponding method for writing data in a common file system used in a distributed memory type computer system is also provided.

According to an embodiment of the present invention, the master computer has a master control table for directly managing file data in the common file system, e.g., an inode control table for managing information of data blocks in use in the common file system, and a super block control table for managing free space in the common file system (those tables are similar to the UNIX operating system), and an access execution unit for accessing the common file system using the master control table in accordance with file access requests and information on file locations provided by each distributed processing computer.

The sub-master control table of the sub-master computer is, e.g., a file control table for managing information on the location of a file in the common file system used in the operating system of a UNIX computer system.

Typically, the distributed processing computer has a data processing unit for referring to or updating file data related to the common file system, a sub-master control table inquiry unit for requesting from the sub-master computer a file location and receiving the information on the file location from the sub-master computer when accessing the file in the common file system, and an access requesting unit for providing a file access request along with information on the file location to the master computer when receiving the information on the file location from the sub-master computer.

According to the present invention, when the data processing unit of a distributed processing computer begins to write data in the common file system, the data processing unit designates a write location as an offset from the beginning of a file and sends an access request to the sub-master control table inquiry unit, and at the same time the data processing unit designates the write data and its attributes and also sends an access request to the access requesting unit. When receiving the access request, the sub-master control table inquiry unit inquires from a computer having a sub-master control table about an access location in a file designated by a write location. When receiving this inquiry of an access location, the computer having a sub-master control table designates information on the access location by appointing a file block corresponding to the designated access location, and then sends the information to the sub-master control table inquiry unit.

When receiving the information related to the access location in the designated file from the computer having a sub-master control table, the sub-master control table inquiry unit sends the information on the access location to the access requesting unit. Then, the access requesting unit designates the access location information, write data designated by the data processing unit and information on the data attributes, and then sends a write request to a computer having a common file system. When receiving the write request, the computer having the common file system executes a write processing using a master control table in accordance with the information on the access location and the data attributes.

As described above, a distributed memory type computer system according to the present invention is able to maintain the uniqueness of data of a file commonly accessed by each computer in the distributed memory type computer system, by managing file data of the common file system by using hierarchically distributed control tables and without the need for caching (mapping) file data from the common file system, etc. Therefore, the distributed memory type computer system is able to incorporate a common file system, and also a data processing load on each computer is reduced and the data processing speed of each computer is accelerated.

### BRIEF DESCRIPTION OF THE DRAWINGS

The present invention will be more clearly understood from the description as set forth below with reference to the accompanying drawings.
Fig. 1 is a schematic view of a conventional distributed memory type computer system for explaining a problem of the distributed memory type computer system.
Fig. 2 is a schematic view of a non-parallel type computer system for explaining data processing in a non-parallel type computer system.
Fig. 3 is a schematic view of a distributed memory type computer system for explaining a problem of the conventional distributed memory type computer system.
Fig. 4 is a principle block diagram of a distributed memory type computer system according to the present invention.
Fig. 5 is a schematic view of a parallel type computer system applicable to the distributed memory type computer system according to the present invention.
Fig. 6 is a schematic view of a preferred embodiment of the present invention.
Fig. 7 shows an example of data management using an inode control table as used in the operating system of a UNIX computer system, in an embodiment of the present invention.
Fig. 8 shows an example of data management using a super block control table as used in the operating system of a UNIX computer system, in an embodiment of the present invention.
Fig. 9 shows an example of data management using a file control table as used in the operating system of a UNIX computer system, in an embodiment of the present invention.
Fig. 10 is a flowchart of data processing executed by a B type computer as a distributed processing computer.
Fig. 11 is a flowchart of data processing executed by a B type computer as a sub-master computer.
Fig. 12 is a flowchart of data processing executed by an A type computer as a master computer.

### DESCRIPTION OF THE PREFERRED EMBODIMENTS

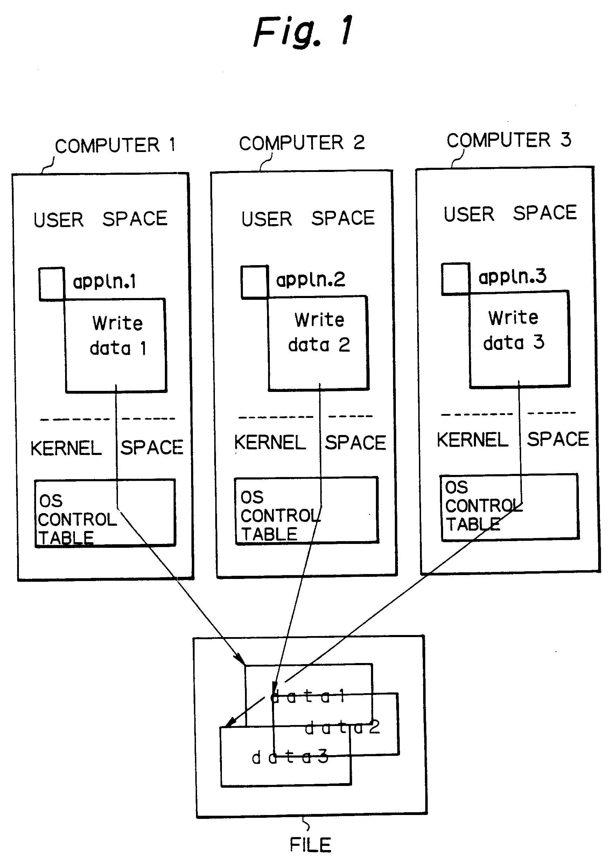

Before describing the preferred embodiments according to the present invention, examples of the related art are provided with reference to accompanying drawings (Fig. 1 to Fig. 3).

Fig. 1 is a schematic view of a conventional distributed memory type computer system for explaining a problem of the distributed memory type computer system. In Fig. 1, the system has a common file system accessed by each of computers 1, 2, 3. In accordance with a write order produced by an application program in the user space set up in each computer, the operating system in a kernel space set up in each computer individually rewrites data in the user space even if this user space is commonly used by the other computers so that the user space is updated without an exclusion control between the computers, e.g., an exclusion control using a file control table set up in the kernel space of each computer, etc.

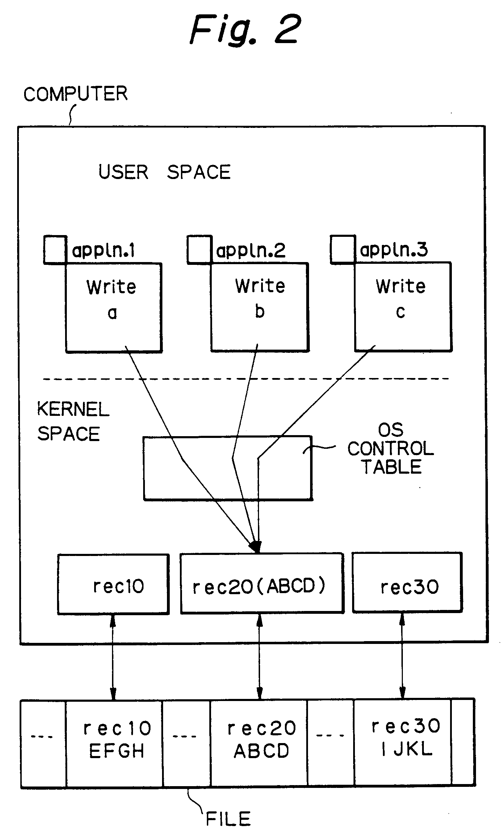

For example, in a non-parallel type computer system or a TCMP (tightly coupled multi processor) parallel type computer system as shown in Fig. 2, which is a schematic view of a non-parallel type computer system for explaining data processing in the non-parallel type computer system, data at a write location requested by an application program is cached (mapped) in a single memory area in accordance with a-single control table for a single file, and then write data is written over cached data in accordance with the single control table, and thereby the computer system as described above is able to execute a write processing without error. For example, data "ABCD" of a record 20 in a file data is cached in the memory. If an application program 1 re-writes data "A" to data "a", an application program 2 re-writes data "B" to data "b" and an application program 3 re-writes data "C" to data "c" sequentially, the original data "ABCD" uniquely changes so that the data becomes "aBCD" -> "abCD" -> "abcD".

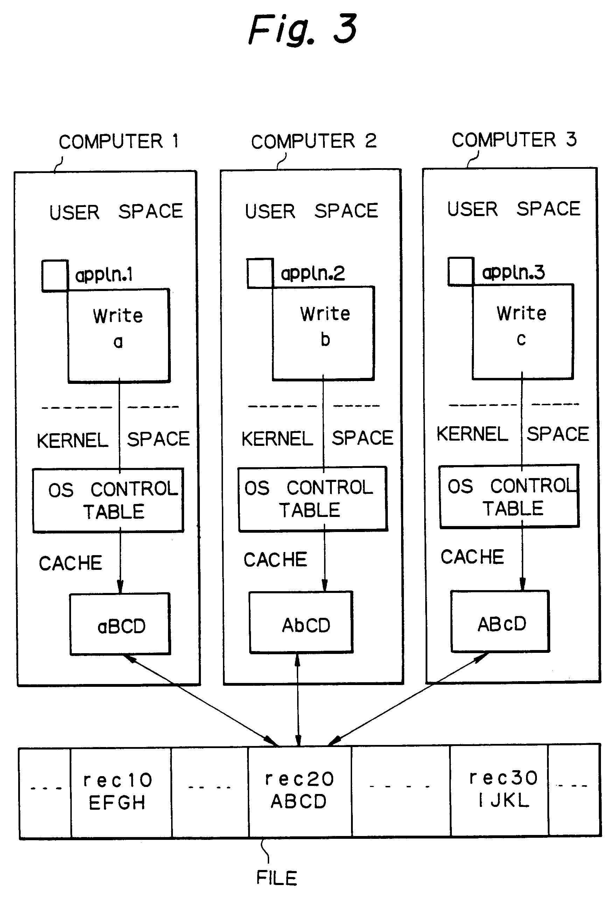

Conversely, in a parallel type computer system as shown in Fig. 3, which is a schematic view of a distributed memory type computer system, three computers 1, 2, 3 respectively cache data "ABCD" in each memory. The data "ABCD" written in each memory of the computers 1, 2, 3 are the same at first. However, if an application program 1 of the computer 1 re-writes data "A" to data "a", an application program 2 of the computer 2 re-writes data "B" to data "b" and an application program 3 of the computer 3 re-writes data "C" to data "c", the uniqueness of a re-written data is lost because each re-written data, i.e., "aBCD", "AbCD", and "ABcD" are individually returned to the same place in a common file by each computer 1, 2, 3. Therefore, as described above each computer must have an individual file system in a conventional distributed memory type computer system.

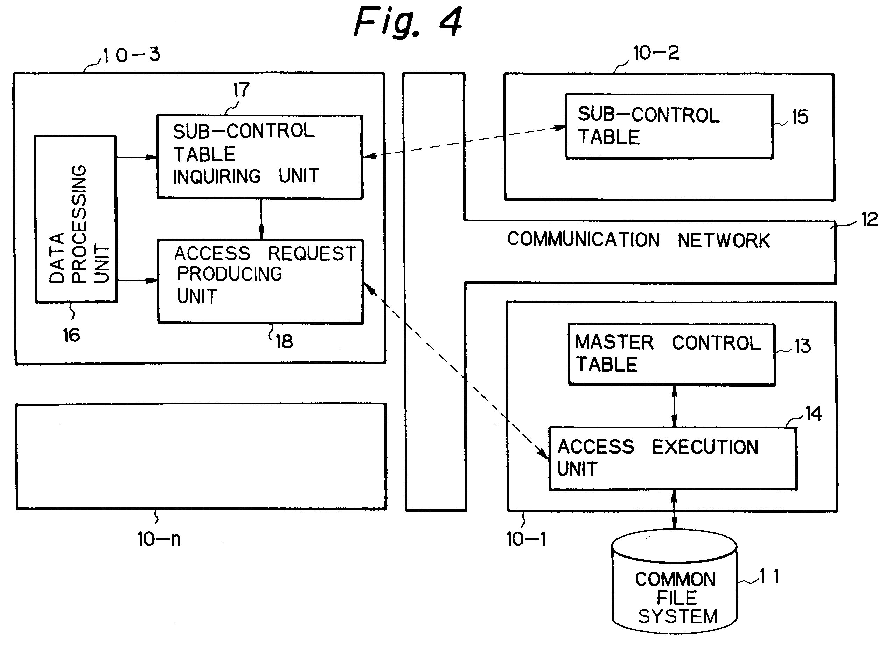

In the following, a preferred embodiment of the present invention is briefly explained with reference to accompanying drawings (Fig. 4 to Fig. 12).

Fig. 4 is a principle block diagram of a distributed memory type computer system according to the present invention.

In Fig. 4, a distributed memory type computer system comprises a common file system 11 for managing a file data being accessed by multiple distributed processing computers 10-3₁ - 10-3ₙ, a master computer 10-1 for managing file data in the common file system 11 and having access to the common file system 11 in accordance with a file access request along with information on a file location provided by each distributed processing computer 10-3₁ - 10-3ₙ, at least one sub-master computer(s) 10-2₁ - 10-2ₘ for providing information on file locations in the common file system to each distributed processing computer 10-3₁ - 10-3ₙ in response to inquiries from each distributed processing computer 10-3₁ - 10-3ₙ about file locations, multiple distributed processing computers 10-3₁ - 10-3ₙ for inquiring of the sub-master computer(s) 10-2₁ - 10-2ₘ file locations and receiving information on a file location from the submaster computer(s) 10-2₁ - 10-2ₘ when accessing a file in the common file system 11 and for providing a file access request, along with information on a file location, to the master computer 10-1, and a communication network 12 for transmitting data between the master computer 10-1, the sub-master computer(s) 10-2₁ - 10-2ₘ and the distributed processing computers 10-3₁ - 10-3ₙ.

The master computer 10-1 has a master control table 13 for directly managing file data in the common file system 11, e.g., an inode control table for managing information on data blocks in use in the common file system and a super block control table for managing free space in the common file system (those tables are similar to the UNIX operating system), and an access execution unit 14 for accessing the common file system 11 using the master control table 13 in accordance with file access requests and information on file locations provided by each distributed processing computer 10-3₁ - 10-3ₙ.

The sub-master computer 10-2₁ - 10-2ₘ has a sub-master control table 15 for managing file locations in the common file system 11, e.g., a file control table for managing information on file locations inside a file in the common file system 11 as used in the UNIX operating system, and providing information on file locations in the common file system 11 to each distributed processing computer 10-3₁ - 10-3ₙ in response to inquiries from each distributed processing computer 10-3₁ - 10-3ₙ about file locations.

Each of distributed processing computers 10-3₁ - 10-3ₙ has a data processing unit 16 for referring to or updating file data related to the common file system 11; a sub-master control table inquiry unit 17 for inquiring of the sub-master computer(s) 10-2₁ - 10-2ₘ file locations and receiving the information on file locations from the sub-master computer(s) 10-2₁ - 10-2ₘ when accessing a file in the common file system 11; and an access requesting unit 18 for providing a file access request along with information on a file locations to the master computer 10-1 when receiving information on a file location from the sub-master computer.

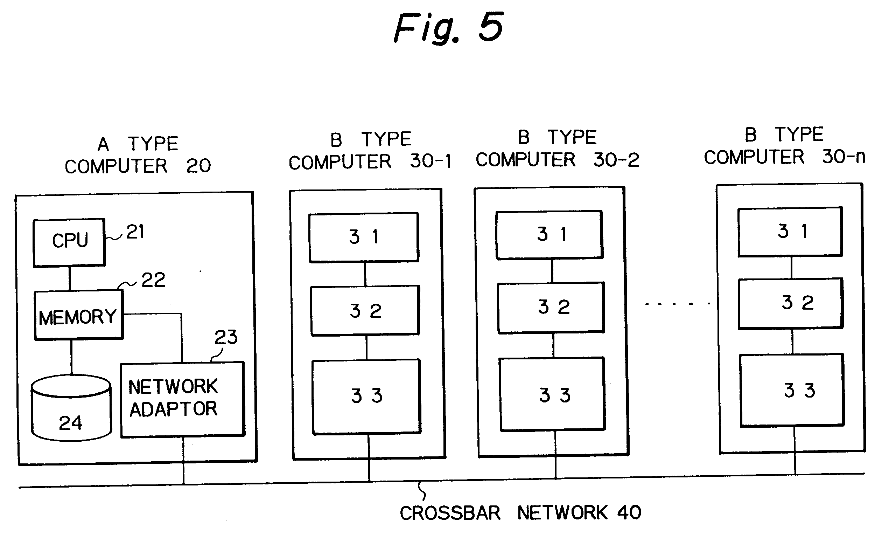

Fig. 5 shows a schematic view of a parallel type computer system applicable to the distributed memory type computer system according to the present invention.

In Fig. 5, reference numeral 20 is an A type computer, reference numeral 30-i (i = 1-n) is a B type computer, and a reference numeral 40 is a crossbar network which connects the A type computer 20 with the plural B type computers 30-i and forms a communication network between them. The A type computer 20 consists of a CPU unit 21, a memory unit 22 and a network adaptor unit 23 and further has a disk storage unit 24. The B type computer 30-i consists of a CPU unit 31, a memory unit 32 and a network adaptor unit 33. The B type computer 30-i has the same constitution as that of the A type computer 20 except for the disk storage unit 24. A storage device that is formed by a non-volatile semiconductor memory may be used in place of the disk storage unit 24 of the A type computer 20.

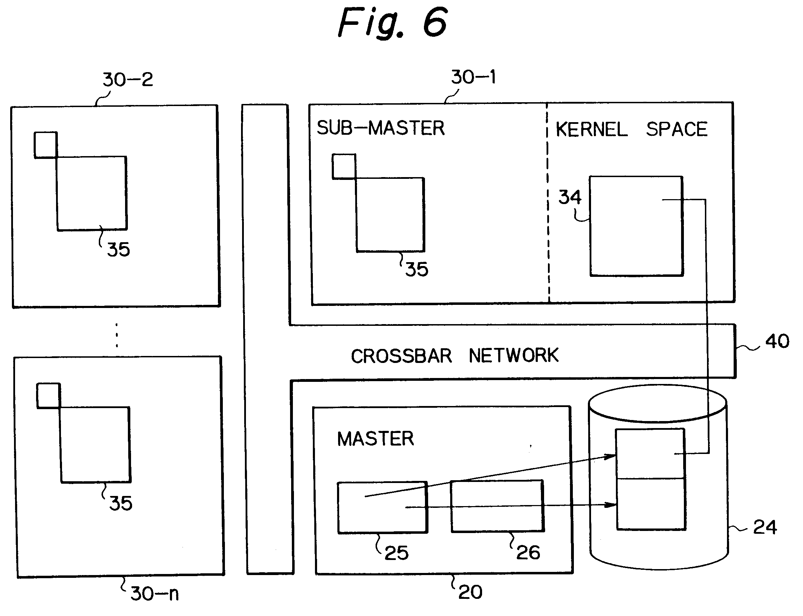

Fig. 6 is a schematic view of a preferred embodiment of the present invention.

In Fig. 6, an inode control table 25 and a super block control table 26 used to access the disk 24 are set up in the A type computer 20 that functions as a master computer. At least one B type computer 30-i B type computer 30-1 in Fig. 6) is selected as a sub-master computer, and a file control table 34 used to access the disk 24 is set up in the B type computer 30-1. Reference numeral 35 is an application program set up in each B type computer 30-i (i = 2-n) that functions as a distributed processing computer. In the embodiment shown in Fig. 6, the B type computer 30-1 functions both as a sub-master computer and a distributed processing computer.

As described above, a distributed memory type computer system according to the present invention the control tables that are needed to access the disk 24 have hierarchical constitution, and thereby it is possible to concentrate the control tables and certain functions associated with the operation of the control tables in specific computers 20, 30-1 as described above.

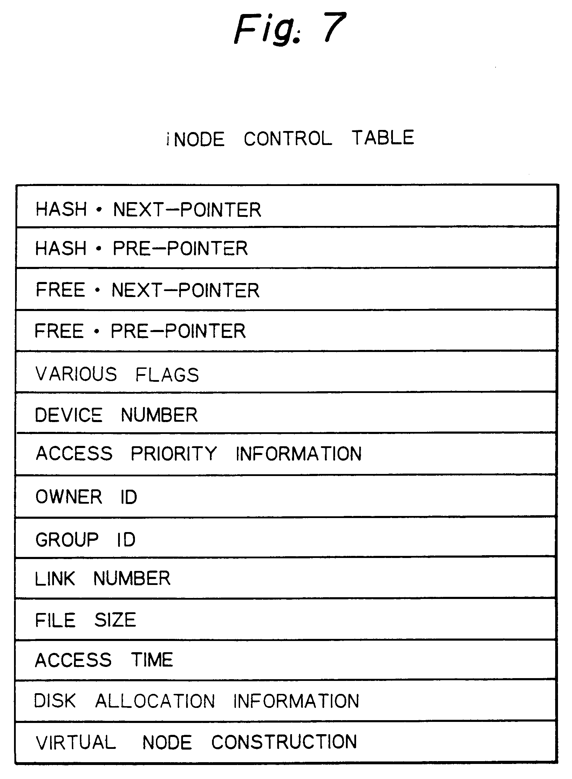

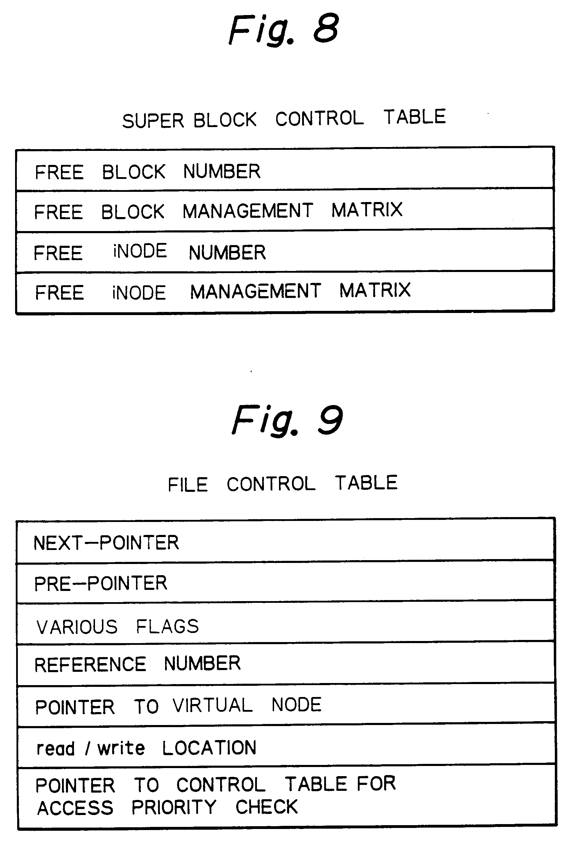

Fig. 7 shows an example of data management using an inode control table 25 set up in the A type computer 20, Fig. 8 shows an example of data management using a super block control table 26 also set up in the A type computer 20, and Fig. 9 shows an example of data management using a file control table 34 set up in the B type computer 30-1 in Fig. 6. These control tables 25, 26, 34 are generally used in the UNIX operating system.

In Fig. 7, the inode control table 25 set up in the A type computer 20 is used to manage information on data block locations in use in the disk 24, and the super block control table 26 shown in Fig. 8 is used to manage free space on the disk 24. In Fig. 9, the file control table 34 set up in the B type computer 30-1 is used to manage information on file locations inside a file on the disk 24. A description of every item contained in those control tables 25, 26, 34 is not given here. For such an explanations, refer to suitable documentation on the UNIX operating system.

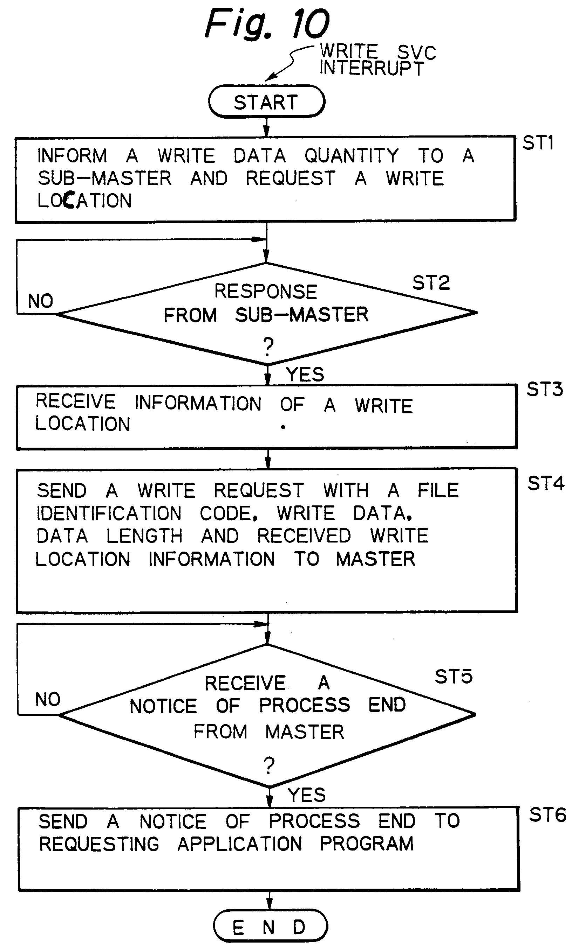

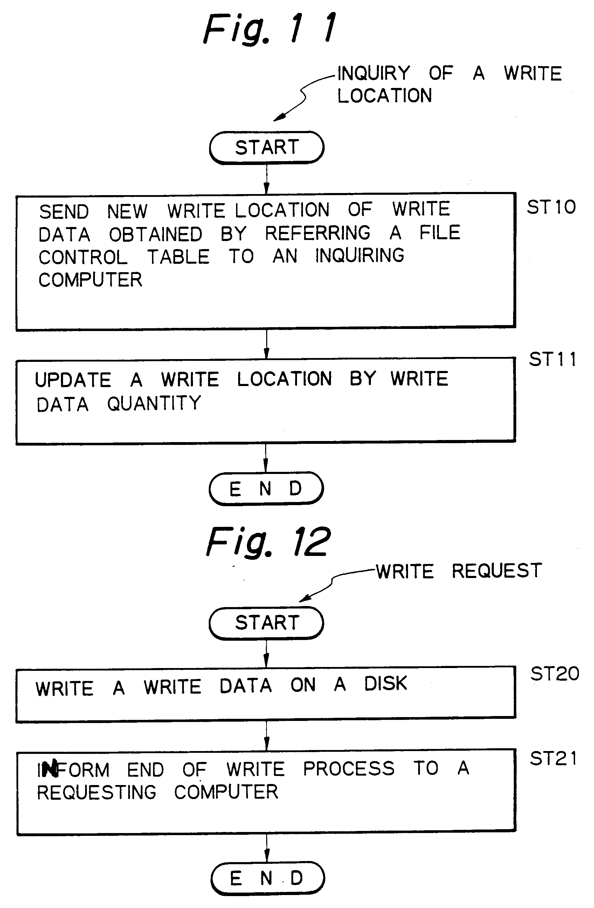

Next, an example of the operation process of the embodiment shown in Fig. 6 and described above is briefly explained in accordance with flowcharts shown in Fig. 10 - 12. Fig. 10 is a flowchart showing a process executed by a B type computer 30-i (i = 2-n) as a distributed processing computer, and shows an example of a processing flow executed by the operating system of the B type computer 30-i when receiving a write request for writing data on the disk 24, which is produced by execution of an application program 35 in the B type computer 30-i. Fig. 11 is a flowchart showing a process executed by a B type computer 30-1 as a sub-master computer and shows an example of a processing flow executed by the operating system of the B type computer 30-1 when receiving an inquiry about a write location of write data, which is produced by execution of the process shown in Fig. 10. Fig. 12 is a flowchart showing a process executed by an A type computer 20 as a master computer and shows an example of a processing flow executed by the operating system of the A type computer 20 when receiving a write request which is produced by execution of the process shown in Fig. 10.

In Fig. 10, when receiving a write request for writing data on the disk 24, which is produced by an execution of an application program 35 in the B type computer 30-i, a step 1 (ST1), the operating system of the B type computer 30-i executes a process wherein the B type computer 30-i inquires of the B type computer 30-1 having a file control table 34 about a write location of a write data, and at the same time sends information on a quantity of the write data to the B type computer 30-1.

In Fig. 11, when receiving an inquiry as described above from the B type computer 30-i, the B type computer 30-1 examines the write location of the write data by referring to a read/write location in the file control table 34, and a file size and an access time in its internal memory, which are the same value as that in the inode control table 25, and then notifies the write location of the write data to the inquiring B type computer 30-i (ST10). In the next step 11 (ST11), the write location in the file control table 34 is updated by the quantity of the write data known from the B type computer 30-i in the step 1, and thereby a preparation process for a next new inquiry is ended. Therefore, the write location is controlled so as not to cause a substitution error.

Next, in Fig. 10 the operating system of the B type computer 30-i waits until receiving an answer to the inquiry described above sent from the B type computer 30-1 in step 2 (ST2), and thereby maintains a status check indicating with/without the answer. When receiving the answer, information on a write location of write data sent from the B type computer 30-1 is received in step 3 (ST3). In the next step 4 (ST4), the B type computer 30-i designates a file identification code, write data, data length and received information, i.e., a read/write location of a file control table 34, file size and access time of an inode control table 25, described above, and then sends a write request along with this information to the A type computer 20 (a master). Thereafter, the B type computer 30-i waits for notification of process end of the write request sent from the A type computer 20 in step 5 (ST5).

In Fig. 12, when receiving the write request described above, in step 20 (ST20) the A type computer 20 mainly writes data related to the file identification code of the inode control table 25, i.e., file size, access time, information on a location on a disk, etc., data related to information on a read/write location of the file control table 34, and data of the super block control table 26, i.e., a free block number, a management matrix of a free block, etc., on a predetermined area of the disk 24. Thereafter, the A type computer 20 sends a notice of process end for the write request to the B type computer 30-i in step 21 (ST21).

In Fig. 10, if the operating system of the B type computer 30-i that controls the application program 35 producing the write request receives the notice of process end of the write request sent from the A type computer 20 in step 5, the operating system of the B type computer 30-i provides a notice of process end for the write request to the application program 35 and finally completes all processes related to the write request.

In an embodiment as described above, the B type computer 30-i (i = 2-n), except for the B type computer 30-1 used as a sub-master computer, is explained as a distributed processing computer that has an application program 35 producing a write request as described above. However, the B type computer 30-1 as a sub-master computer, and also the A type computer 20 as a master computer, may also have the application program 35 producing a write request in the same manner as described above.

In the constitution described above, the A type computer 20 has a common file disk 24, and control tables used to access the common file disk 24 from the other B type computers 30-i are hierarchically distributed in the A type computer 20 and a specific B type computer 30-1 as a sub-master computer. Each B type computer 30-i does not need to cache file data of the disk 24 and further may only send an access request for the disk 24 to the A type computer 20 and the B type computer 30-1, and thereby only the A type computer 20 can access the disk 24. Therefore, a load on the A type computer 20 is reduced by sharing a portion of the control tables with the B type computer 30-1 as a sub-master computer, and further the uniqueness of file data can be easily maintained by this constitution.

As described above, according to the present invention a distributed memory type computer system is able to maintain the uniqueness of file data commonly accessed by each computer in the distributed memory type computer system.

Further, according to the present invention a distributed memory type computer system is able to keep performance as a total computer system from deteriorating even if the computer system is formed by a great number of computers, and thereby it is possible to realize simplification of pre-preparation or checking of an access priority and provide high speed file access. Namely, since a first processing computer executes, e.g., an open process, a seek process, etc., and another computer may copy information from a file, a total file access time is accelerated.

Furthermore, according to the present invention maintenance work, e.g., updating the version of an operating system, debugging a program in association with every computer in the computer system, etc., is made simplified because the maintenance work can be carried out by using only the operating system of the common file system.

## Claims

1. A distributed memory type computer system, comprising plural distributed processing computers (10-3₁ - 10-3ₙ) and a common file system (11) for storing file data being accessed by said plural distributed processing computers, characterized in that it comprises:
at least one sub-master computer (10-2₁ - 10-2ₘ) having a sub-master control table (15) for managing file locations in said common file system (11) thereby providing each of said distributed processing computers with information on a write location of a file in said common file system in response to an inquiry from said each distributed processing computer (10-3₁ - 10-3ₙ) about said write location, and
a master computer (10-1) for accessing said common file system (11) and writing file data into said common file system in accordance with a write request and said information on a write location, received from said each distributed processing computer (10-3₁ - 10-3ₙ).

2. A distributed memory type computer system as set forth in claim 1, wherein said distributed processing computers (10-3₁ - 10-3ₙ) directly provide said file access request to said master computer (10-1) without said inquiring of said sub-master computers (10-2₁ - 10-2ₘ) when having write access to the file in said common file system (11).

3. A distributed memory type computer system as set forth in claim 1 or 2, wherein said master computer (10-1) has a master control table (13) for directly managing file data in said common file system (11), and an access execution unit (14) for accessing said common file system (11) using said master control table (13) in accordance with said file access request and said information on a file location provided by each of said distributed processing computers (10-3₁ - 10-3ₙ).

4. A distributed memory type computer system as set forth in claim 3, wherein said master control table (13) is constituted by an inode control table for managing information on data blocks in use in said common file system (11) and a super block control table for managing free space of said common file system (11) used in a UNIX operating system.

5. A distributed memory type computer system as set forth in any one of claims 1 to 4, wherein each of said distributed processing computers (10-3₁ - 10-3ₙ) has a data processing unit (16) for referring to or updating file data associated with said common file system (11), a sub-master control table inquiry unit (17) for inquiring of said sub-master computer (10-2₁ - 10-2ₘ) said file location and receiving said information on a file location from said sub-master computer (10-2₁ - 10-2ₘ) when accessing the file in said common file system (11), and an access requesting unit (18) for providing said file access request and said information on a file location to said master computer (10-1) when receiving said information on a file access location.

6. A distributed memory type computer system as set forth in any one of claims 1 to 5, wherein said sub-master control table (15) is a file control table for managing information on a file location inside a file of said common file system (11) used in a UNIX operating system.

7. A method for writing data in a common file system used in a distributed memory type computer system, characterized in that it comprises:
a first step in which each of a plurality of distributed processing computers (10-3₁ - 10-3ₙ) in said computer system for executing respective application processes provides a quantity of write data to at least one sub-master computer (10-2₁ - 10-2ₘ) and thereby inquires of said sub-master computer (10-2₁ - 10-2ₘ) a write location of a file when accessing the file in said common file system (11) for managing file data being accessed by said distributed processing computers (10-3₁ - 10-3ₙ),
a second step in which said sub-master computer (10-2₁ - 10-2ₘ) uses a sub-master control table (15) for managing a file location of said common file system (11) to provide each of said distributed processing computers (10-3₁ - 10-3ₙ) with information on said write location of the file in said common file system (11) upon said inquiry from each of said distributed processing computers (10-3₁ - 10-3ₙ),
a third step in which each of said distributed processing computers (10-3₁ - 10-3ₙ) provides a write request with attribute information of said write data and said information on said write location of the file in said common file system (11), received from said sub-master computer (10-2₁ - 10-2ₘ), to a master computer (10-1) for directly managing file data of said common file system (11), and
a fourth step in which said master computer (10-1) has access to said common file system (11) using a master control table (13) for directly managing file data in said common file system (11) in accordance with said write request and said information on said write location provided by each of said distributed processing computers (10-3₁ - 10-3ₙ), and notifies an end of write process to each of said distributed processing computers (10-3₁ - 10-3ₙ).

8. A method for writing data in a common file system used in a distributed memory type computer system as set forth in claim 7, wherein said master control table (13) is constituted by an inode control table for managing information of data blocks in use in said common file system (11) and a super block control table for managing free space in said common file system (11) used in a UNIX operating system.

9. A method for writing data in a common file system used in a distributed memory type computer system as set forth in claim 7 or 8, wherein said sub-master control table (15) is a file control table for managing information of a file location inside a file of said common file system (11) used in a UNIX operating system.

## Patentansprüche

1. Computersystem vom verteilten Speichertyp, umfassend mehrere verteilte Verarbeitungscomputer (10-3₁ - 10-3ₙ) und ein gemeinsames Dateisystem (11) zum Speichern von Dateidaten, auf die durch die mehreren verteilten Verarbeitungscomputer zugegriffen wird, dadurch gekennzeichnet, daß es aufweist:
zumindest einen Sub-Mastercomputer (10-2₁ - 10-2ₘ) mit einer Sub-Mastersteuertabelle (15) zum Verwalten von Dateistellen in dem gemeinsamen Dateisystem (11), wodurch jeder der verteilten Verarbeitungscomputer mit Information über eine Schreibstelle einer Datei in dem gemeinsamen Dateisystem als Antwort auf eine Abfrage von jedem verteilten Verarbeitungscomputer 10-3₁ - 10-3ₙ) über die Schreibstelle versorgt wird, und
einen Mastercomputer (10-1) zum Zugreifen auf das gemeinsame Dateisystem (11) und Schreiben von Dateidaten in das gemeinsame Dateisystem gemäß einer Schreibanforderung und der Information über eine Schreibstelle, die von jedem verteilten Verarbeitungscomputer (10-3₁ - 10-3ₙ) empfangen wurde.

2. Computersystem vom verteilten Speichertyp nach Anspruch 1, worin die verteilten Verarbeitungscomputer (10-3₁ -10-3ₙ) ohne das Abfragen der Sub-Mastercomputer (10-2₁ - 10-2ₘ) jede Dateizugriffsanforderung direkt an den Mastercomputer (10-1) liefern, wenn sie einen Schreibzugriff auf die Datei in dem gemeinsamen Dateisystem (11) haben.

3. Computersystem vom verteilten Speichertyp nach Anspruch 1 oder 2, worin der Mastercomputer (10-1) eine Mastersteuertabelle (13) zum direkten Verwalten von Dateidaten in dem gemeinsamen Dateisystem (11) und eine Zugriffsausführungseinheit (14) zum Zugreifen auf das gemeinsame Dateisystem (11) unter Verwendung der Mastersteuertabelle (13) gemäß der Dateizugriffsanforderung und der Information über eine Dateistelle aufweist, die durch jeden der verteilten Verarbeitungscomputer (10-3₁ - 10-3ₙ) geliefert werden.

4. Computersystem vom verteilten Speichertyp nach Anspruch 3, worin die Mastersteuertabelle (13) durch eine i-Knoten-Steuertabelle zum Verwalten von Information über Datenblöcke im Gebrauch in dem gemeinsamen Dateisystem (11) und eine Superblocksteuertabelle zum Verwalten von freiem Raum des gemeinsamen Dateisystems (11) gebildet wird, die in einem UNIX-Betriebssystem verwendet werden.

5. Computersystem vom verteilten Speichertyp nach einem der Ansprüche 1 bis 4, worin jeder der verteilten Verarbeitungscomputer (10-3₁ - 10-3ₙ) eine Datenverarbeitungseinheit (16) zum Bezugnehmen auf oder Aktualisieren von Dateidaten aufweist, die mit dem gemeinsamen Dateisystem (11) verbunden sind, eine Sub-Mastersteuertabelle-Abfrageeinheit (17) zum Abfragen der Dateistelle von dem Sub-Mastercomputer (10-2₁ -10-2ₘ) und Empfangen der Information über eine Dateistelle vom Sub-Mastercomputer (10-2₁ - 10-2ₘ), wenn auf die Datei in dem gemeinsamen Dateisystem (11) zugegriffen wird, und eine Zugriffsanforderungseinheit (18) zum Liefern der Dateizugriffsanforderung und der Information über eine Dateistelle an den Mastercomputer (10-1), wenn die Information über eine Dateizugriffsstelle empfangen wird.

6. Computersystem vom verteilten Speichertyp nach einem der Ansprüche 1 bis 5, worin die Sub-Mastersteuertabelle (15) eine Dateisteuertabelle zum Verwalten von Information über eine Dateistelle innerhalb einer Datei des gemeinsamen Dateisystems (11) ist, die in einem UNIX-System verwendet wird.

7. Verfahren zum Schreiben von Daten in einem gemeinsamen Dateisystem, das in einem Computersystem vom verteilten Speichertyp verwendet wird, dadurch gekennzeichnet, daß es umfaßt:
einen ersten Schritt, in welchem jeder der Mehrzahl von verteilten Verarbeitungscomputern (10-3₁ - 10-3ₙ) in dem Computersystem zum Ausführen jeweiliger Anwendungsprozesse eine Menge von Schreibdaten an mindestens einen Sub-Mastercomputer (10-2₁ - 10-2ₘ) liefert und dadurch eine Schreibstelle des Sub-Mastercomputers (10-2₁ - 10-2ₘ) einer Datei abfrägt, wenn auf die Datei in dem gemeinsamen Dateisystem (11) zugegriffen wird, um Dateidaten zu verwalten, auf die durch die verteilten Verarbeitungscomputer (10-3₁ - 10-3ₙ) zugegriffen wird,
einen zweiten Schritt, in welchem der Sub-Mastercomputer (10-2₁ - 10-2ₘ) eine Sub-Mastersteuertabelle (15) zum Verwalten einer Dateistelle des gemeinsamen Dateisystems (11) verwendet, um jeden der verteilten Verarbeitungscomputer (10-3₁ - 10-3ₙ) mit Information über die Schreibsteile der Datei in dem gemeinsamen Dateisystem (11) auf die Abfrage von jedem der verteilten Verarbeitungscomputer (10-3₁ - 10-3ₙ) hin zu versorgen,
einen dritten Schritt, in welchem jeder der verteilten Verarbeitungscomputer (10-3₁ - 10-3ₙ) eine Schreibanforderung mit einer Attributinformation der Schreibdaten und die Information über die Schreibstelle der Datei in dem gemeinsamen Dateisystem (11), die von dem Sub-Mastercomputer (10-2₁ - 10-2ₘ) empfangen wurde, an einen Mastercomputer (10-1) zum direkten Verwalten von Dateidaten des gemeinsamen Dateisystems (11) liefert, und
einen vierten Schritt, in welchem der Mastercomputer (10-1) Zugriff auf das gemeinsame Dateisystem (11) unter Verwendung einer Mastersteuertabelle (13) zum direkten Verwalten von Dateidaten in dem gemeinsamen Dateisystem (11) gemäß der Schreibanforderung und der Information über die Schreibstelle aufweist, die durch jeden der verteilten Verarbeitungscomputer (10-3₁ - 10-3ₙ) geliefert werden, und ein Ende eines Schreibprozesses an jeden der verteilten Verarbeitungscomputer (10-3₁ - 10-3ₙ) meldet.

8. Verfahren zum Schreiben von Daten in einem gemeinsamen Dateisystem, das in einem Computersystem vom verteilten Speichertyp verwendet wird, nach Anspruch 7, worin die Mastersteuertabelle (13) durch eine i-Knoten-Steuertabelle zum Verwalten von Information der Datenblöcke im Gebrauch in dem gemeinsamen Dateisystem (11) und eine Superblocksteuertabelle zum Verwalten von freiem Raum in dem gemeinsamen Dateisystem (11) gebildet wird, die in einem UNIX-Betriebssystem verwendet werden.

9. Verfahren zum Schreiben von Daten in einem gemeinsamen Dateisystem, das in einem Computersystem vom verteilten Speichertyp verwendet wird, nach Anspruch 7 oder 8, worin die Sub-Mastersteuertabelle (15) eine Dateisteuertabelle zum Verwalten von Information einer Dateistelle innerhalb einer Datei des gemeinsamen Dateisystems (11) ist, das in einem UNIX-Betriebssystem verwendet wird.

## Revendications

1. Système informatique de type à mémoire répartie comprenant plusieurs ordinateurs (10-3₁ à 10-3ₙ) de traitement réparti et un système commun (11) de fichiers destiné à mémoriser des données de fichier auxquelles accèdent lesdits plusieurs ordinateurs de traitement réparti, caractérisé en ce qu'il comprend :
au moins un ordinateur (10-2₁ à 10-2ₘ) maître en second comportant une table (15) de commande de maître en second destinée à gérer des emplacements de fichier dans ledit système commun (11) de fichiers en fournissant ainsi à chacun desdits ordinateurs de traitement réparti de l'information se rapportant à un emplacement d'écriture d'un fichier dans ledit système commun de fichiers en réponse à une demande provenant de chaque dit ordinateur (10-3₁ à 10-3ₙ) de traitement réparti au sujet dudit emplacement d'écriture ; et
un ordinateur maître (10-1) destiné à accéder audit système commun (11) de fichiers et à écrire des données de fichier dans ledit système commun de fichiers en fonction d'une demande d'écriture et de ladite information concernant un emplacement d'écriture, reçues de chaque dit ordinateur (10-3₁ à 10-3ₙ) de traitement réparti.

2. Système informatique de type à mémoire répartie selon la revendication 1, dans lequel lesdits ordinateurs (10-3₁ à 103ₙ) de traitement réparti délivrent directement ladite demande d'accès à un fichier audit ordinateur maître (10-1) sans ladite demande desdits ordinateurs (10-2₁ à 10-2ₘ) maîtres en second lorsqu'ils ont un accès d'écriture aux fichiers dans ledit système commun (11) de fichiers.

3. Système informatique de type à mémoire répartie selon la revendication 1 ou 2, dans lequel ledit ordinateur maître (10-1) comporte une table (13) de commande de maître destinée à gérer directement des données de fichier dans le système commun (11) de fichiers, et un module (14) d'exécution d'accès destiné à accéder audit système commun (11) de fichiers en utilisant ladite table (13) de commande de maître en fonction de ladite demande d'accès à un fichier et de ladite information se rapportant à un emplacement de fichier fournies par chaque ordinateur (10-3₁ à 10-3ₙ) de traitement réparti.

4. Système informatique de type à mémoire répartie selon la revendication 3, dans lequel , ladite table (13) de commande de maître est constituée par une table de commande d'inode destinée à gérer de l'information se rapportant à des blocs de données en utilisation dans ledit système commun (11) de fichiers, et par une table de commande de superblocs destiné à gérer l'espace libre dans ledit système commun (11) de fichiers, utilisées dans un système d'exploitation UNIX.

5. Système informatique de type à mémoire répartie selon l'une quelconque des revendications 1 à 4, dans lequel chacun desdits ordinateurs (10-3₁ à 10-3ₙ) de traitement réparti possède un module (16) de traitement de données destiné à se référer à, ou à mettre à jour, des données de fichier associées audit système commun (11) de fichiers, un module (17) de demande de table de commande de maître en second destiné à s'enquérir, auprès dudit ordinateur (10-2₁ à 10-2ₘ) maître en second, dudit emplacement de fichier et à recevoir, dudit ordinateur (10-2₁ à 10-2ₘ) maître en second, ladite information sur un emplacement de fichier, lors de l'accès au fichier dans ledit système commun (11) de fichiers, et un module (18) de demande d'accès destiné à fournir, audit ordinateur maître (10-1), ladite demande d'accès à un fichier et ladite information sur un emplacement de fichier, lors de la réception de ladite information sur un emplacement d'accès à un fichier.

6. Système informatique de type à mémoire répartie selon l'une quelconque des revendications 1 à 5, dans lequel ladite table (15) de commande de maître en second est une table de commande de fichier destinée à gérer de l'information se rapportant à un emplacement de fichier à l'intérieur d'un fichier dudit système commun (11) de fichiers utilisé dans un système d'exploitation UNIX.

7. Procédé d'écriture de données dans un système commun de fichiers utilisé dans un système informatique de type à mémoire répartie, caractérisé en ce qu'il comprend :
une première étape dans laquelle chacun d'une pluralité d'ordinateurs (10-3₁ à 10-3ₙ) de traitement réparti, dans ledit système informatique, destinés à exécuter des traitements d'application respectifs, fournit une certaine quantité de données d'écriture à au moins un ordinateur (10-2₁ à 10-2ₘ) maître en second et s'enquiert ainsi, auprès dudit ordinateur (10-2₁ à 10-2ₘ) maître en second, d'un emplacement d'écriture d'un fichier, lors de l'accès au fichier dans ledit système (11) commun de fichiers destiné à gérer des données de fichier auxquelles accèdent lesdits ordinateurs (10-3₁ à 10-3ₙ) de traitement réparti ;
une deuxième étape dans laquelle ledit ordinateur (10-2₁ à 10-2ₘ) maître en second utilise une table (15) de commande de maître en second pour gérer un emplacement de fichier dudit système commun (11) de fichiers pour fournir à chacun desdits ordinateurs (10-3₁ à 10-3ₙ) de traitement réparti de l'information sur ledit emplacement d'écriture du fichier dans ledit système commun (11) de fichiers, lors de ladite demande issue de chacun desdits ordinateurs (10-3₁ à 10-3ₙ) de traitement réparti ;
une troisième étape dans laquelle chacun desdits ordinateurs (10-3₁ à 10-3ₙ) de traitement réparti délivre, à l'ordinateur maître (10-1), une demande d'écriture avec de l'information d'attributs de ladite donnée d'écriture et ladite information sur ledit emplacement d'écriture du fichier dans ledit système commun (11) de fichiers, reçue dudit ordinateur (10-2₁ à 10-2ₘ) maître en second, pour gérer directement des données de fichier dudit système commun (11) de fichiers ; et
une quatrième étape dans laquelle ledit ordinateur maître (10-1) a accès audit système commun (11) de fichiers en utilisant une table (13) de commande de maître pour gérer directement des données de fichier dans ledit système commun (11) de fichiers, en fonction de ladite demande d'écriture et de ladite information sur ledit emplacement d'écriture fournie par chacun des ordinateurs (10-3₁ à 10-3ₙ) de traitement réparti, et notifie une fin de traitement d'écriture à chacun desdits ordinateurs (10-3₁ à 10-3ₙ) de traitement réparti.

8. Procédé d'écriture de données dans un système commun de fichiers utilisé dans un système informatique de type à mémoire répartie selon la revendication 7, dans lequel ladite table (13) de commande de maître est constituée par une table de commande d'inode destinée à gérer de l'information de blocs de données en utilisation dans ledit système commun (11) de fichiers, et une table de commande de superblocs destinée à gérer de l'espace libre dans ledit système commun (11) de fichiers, utilisées dans un système d'exploitation UNIX.

9. Procédé d'écriture de données dans un système commun de fichiers utilisé dans un système informatique de type à mémoire répartie selon la revendication 7 ou 8, dans lequel ladite table (15) de commande de maître en second est une table de commande de fichier destinée à gérer de l'information d'un emplacement de fichier à l'intérieur d'un fichier dudit système commun (11) de fichiers, utilisée dans un système d'exploitation UNIX.
